# EUROPÄISCHE PATENTANMELDUNG

(11) **EP 2 277 680 A1**
(43) Veröffentlichungstag der Anmeldung: **26.01.2011**
(21) Anmeldenummer: 10007306.3
(22) Anmeldetag: 15.07.2010
(51) Int. Cl.: B29C 45/16, H01R 4/70, H01R 31/02

(54) **Kabelverzweigung zum Anschluss von Photovoltaikmodulen und Verfahren zu seiner Herstellung**

(30) Priorität: 21.07.2009 DE 102009034037
(71) Anmelder: Adensis GmbH, 01129 Dresden (DE)
(72) Erfinder: Neussner, Thomas, 97447 Gerolzhofen (DE); Jurchen, Michael, 97265 Helmstadt (DE)

(57) **Zusammenfassung**

Eine Kabelverzweigung (1) für die Bildung einer T- oder Y-förmigen Abzweigung einer Anschlussleitung (5) von einem Photovoltaik-Element an eine Sammelleitung (3) sieht vor, dass ein Vorverguss (13) aus einem Polyolephin im Niederdruck-Spritzguss-verfahren vorgenommen wird, dem ein Endverguss (15) aus TPE; TPU; PA 6 oder TPE-B-Flex im Hochdruck-Spritzgussverfahren folgt. Der Vorverguss kann dünn und blasenfrei erzeugt werden und es werden keine hohen mechanischen Anforderungen an ihn gestellt. Der Endverguss ist aus einem härteren Material hoher Festigkeit.

## Beschreibung

Die Erfindung bezieht sich auf ein Verfahren zur Fertigung einer Kabelverzweigung für die Bildung einer T- oder Y-förmigen Verbindung einer Photovoltaikmodul-Anschlussleitung mit Elektronenstrahl-vernetztem außen liegenden Mantel an eine Sammelleitung mit Elektronenstrahl-vernetztem außen liegenden Mantel. Sie bezieht sich ebenfalls auf eine entsprechend hergestellte Verbindung. Unter außen liegendem Mantel wird bei 2 schichtig isolierten Kabeln der Außenmantel verstanden, soweit das Kabel unverändert ist. Wenn der Außenmantel abgetragen wurde, wird die zuvor innen liegende Isolation zum Außenmantel im Sinne dieser Erfindung.

Solche Kabelverzweigungen werden bisher auf der Baustelle mittels Dosen oder aufgebrachten Steckverbindungen ausgeführt. Die resultierende Verbindung besitzt nicht immer gleichzeitig eine zufriedenstellende mechanische Festigkeit und einen guten Schutz gegen eindringende Feuchtigkeit mit der Gefahr der Korrosion der verlöteten oder gecrimpten Adern oder Seelen der Leitungen. In jüngster Zeit sind auch einfache Gussverbindungen bekannt geworden. Diesen haftet der Mangel an, dass das Vergussmaterial nicht auf dem Isolationsmaterial des Kabels abbinden kann. Das Eindringen von Feuchtigkeit durch Kapillarkräfte ist die Folge. Dies gilt insbesondere beim Einsatz von Elektronenstrahlvernetzten Leitungen oder Kabeln, die aus Gründen der UV- und Witterungsbeständigkeit bei Außenanlagen sehr beliebt sind. Bei der Herstellung einer Verzweigung eines solchen Kabels hat es sich herausgestellt, dass bei Verwendung klassischer Vergussmaterialien keine Verbindung mit der Oberfläche des Leitungsmantels erfolgt. Dies wird dem Umstand zugeschrieben, dass der Außenmantel aufgrund der Elektronenstrahlvernetzung eine geänderte Molekülstruktur erfährt, die seine Oberfläche gegen Wärme beständig macht. Dieses verhindert aber beim Vergießen eine Verbindung der Vergussmasse mit dem Außenmantel der Leitung, was zum genannten Eindringen von Feuchtigkeit führen kann.

Die Erfindung hat es sich zur Aufgabe gestellt, die Herstellung dieser Y-Verbindungen zu erleichtern und die Eigenschaften der Y-Verbindung zu verbessern.

Diese Aufgabe wird bezüglich des Verfahrens dadurch gelöst, dass die Ader der Anschlussleitung mit der Ader der Sammelleitung verbunden wird, dass die Stelle der Verbindung und ein weiteres angrenzendes Stück des Außenmantels der Leitungen mittels einer Niederdruck-Spritztechnik mit einem ersten Material vorvergossen werden, und dass anschließend um die vorvergossene Masse herum mittels eines Hochdruckspritzverfahrens ein Endverguss mit einem zweiten Material vorgenommen wird. Bezüglich der Vorrichtung wird die Aufgabe dadurch gelöst, dass der Endverguss aus einem der folgenden Materialien besteht: thermoplastisches Elastomer (TPE); thermoplastisches Elastomer auf Urethan (TPU); Caprolactam (PA 6) oder TPE-B-Flex und dass das Material des Vorvergusses ein Polyolephin ist.

Der Vorverguss hat dabei die Aufgabe, für ein enges Anliegen des elektrischen Isolationsmaterials an den Adern und der gewählten Aderverbindung, z.B. Verlötung oder Vercrimpung zu sorgen. Dies geschieht vorzugsweise mittels eines Polyolephins, welches hervorragende Klebeeigenschaft hat und feuchtigkeitsdicht an dem Außenmantel der Leitungen oder Kabel verklebt. Außerdem hat der Vorverguss die Aufgabe ein haftendes Zwischenglied zwischen der Isolation der Leitung und der äußeren Vergussmasse zu bilden. Dies verhindert das Eindringen von Feuchtigkeit durch kapillarische Kräfte. Da keine Rücksicht auf eine ausreichende mechanische Stabilität genommen werden muss, kann eine relativ kleine Menge an Vorvergussmasse verwendet werden. Dies wiederum ermöglicht ein Vergießen mit einer Niederdruck-Spritztechnik, die einen Vorverguss ohne oder nur mit wenigen, kleinen Luftblasen zur Folge hat, so dass eine hohe Durchschlagfestigkeit von bis zu 10 kV erreicht wird. Die Vorvergussmasse ist daher gut elektrisch isolierend. Ihr Material sollte auch hydrophob sein, um vor der Gefahr des Eintritts von Feuchtigkeit zu schützen.

Die Endvergussmasse ist so auszulegen, dass sie im ausgehärteten Zustand einen mechanischen Schutz gegen Knicken bewirkt. Dazu ist es zweckmäßig, sie ein Stück über die Isolation der Sammelleitung und der Anschlussleitung hinweg fortzuführen. Um ein vorzeitiges Altern und Verspröden zu verhindern, ist die Endvergussmasse vorzugsweise UV-strahlungsbeständig und UV-Strahlen blockierend. Um auch einen Schocktest (Cold-Impact-Test) nach zu bestehen, hat sich als Material für den Endverguss ein thermoplastisches Elastomer (TPE); thermoplastisches Elastomer auf Urethan (TPU); Caprolactam (PA 6) oder TPE-B-Flex - Kunststoff bewährt.

Bei der Anwendung des Verfahrens hat es sich herausgestellt, dass das Hochdruck-Spritzverfahren des Endvergusses eine Verschiebung des Vorvergusses um die Y-Verbindung der Seelen oder Adern herum bewirkt. Diese Verschiebung kommt durch ein Verblasen der Vorvergussmasse zustande und kann soweit reichen, dass die Vorvergussmasse bis außen an den Rand der Endvergussmasse reicht. Um diesen negativen Effekt zu verhindern, sieht eine Ausgestaltung des Verfahrens und der Vorrichtung vor, der Endverguss in der Nähe des Kabelaustritts aus dem Endverguss mit einer Einschnürung oder Verengung versehen ist, die insbesondere die Form einer den Leitungsmantel umlaufenden Nut aufweist. Durch diese Einschnürung, die sich in der zugehörigen Guss-Negativform als umlaufende Erhebung in der Kavität darstellt, wird die Endvergussmasse zwar unter hohem Druck aber doch so kontrolliert verwirbelt in die Form eingespritzt, dass die Vorvergussmasse nicht an den Rand der Gussform geblasen wird. Die Vorvergussmasse wäre ansonsten später an der Oberfläche der fertigen Y-Verbindung sichtbar, wäre dort ohne den entsprechenden Schutz der Endvergussmasse den Umwelteinflüssen ausgesetzt. In diesem Zusammenhang soll ausgeführt werden, dass unter dem Terminus "Niederdruck-Spritztechnik" ein Spritzgussverfahren verstanden wird, welches mit Drücken zwischen 2 bar und 5 bar, insbesondere zwischen 3 bar und 4 bar arbeitet, und unter dem Begriff "Hochdruck-Spritzverfahren" ein Spritzgussverfahren verstanden wird, bei welchem Drücke zwischen 20 bar und 200 bar, insbesondere zwischen 20 bar und 180 bar eingesetzt werden.

Bei der Kabelverzweigung hat der Endverguss bevorzugt eine Anformung, in welcher sich eine durchgehende Aussparung befindet, die zur Befestigung der Verzweigung mittels eines Befestigungsmittels, wie z.B. einer Schraube, dient.

Weitere Vorteile uns Ausgestaltungen der Erfindung ergeben sich aus der Beschreibung eines Ausführungsbeispiels anhand der Figuren. Es zeigen:
- Firgur 1: Querschnitt durch eine erfindungsgemäße Kabelverzweigung mit Vor- und Endverguss, und

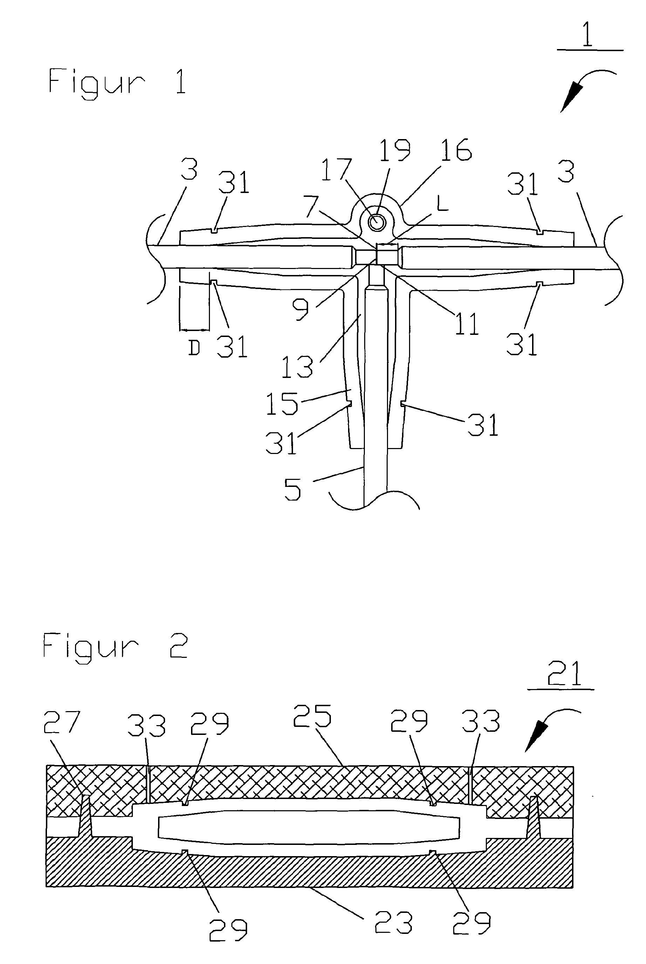

- Figur 2: eine Gießform für den Endverguss der Abzweigung.

In der Figur ist mit 1 eine Kabelverzweigung bezeichnet, die eine Sammelleitung 3 und eine Anschlussleitung 5 miteinander verbindet. Die Begriffe Kabel und Leitung werden als Synonym füreinander verwendet. Ebenso sind sowohl die Begriffe "Ader" oder "Seele" für das stromführende metallische Teil einer Leitung gebraucht, wobei sowohl massive als auch Litzenförmige Adern zum Einsatz kommen können. Die Anschlussleitung 5 führt zu einem Photovoltaikelement, wie z.B. einem einzelnen Photovoltaik-Modul oder einem Strang, der wiederum aus einer Reihenschaltung von mehreren Photovoltaik-Modulen besteht. Sie hat z.B. einen Aderquerschnitt von 4 oder 6 qmm. Die Sammelleitung 3 führt zu einem Wechselrichter (nicht gezeigt) und hat z.B. einen Aderquerschnitt von 10 qmm. Die Anschlussleitung 3 ist mit der Sammelleitung durch eine geeignete Verbindung 7, beispielsweise eine Löt- oder Crimpverbindung dauerhaft verbunden. Sowohl die Sammelleitung 3 als auch die Anschlussleitung 5 sind aus einem Elektronenstrahl vernetzten Kunststoff gefertigt.

Die Sammelleitung 3 ist in ihrem Verlauf auf eine Länge L von ca. 1 bis 2 cm abisoliert, so dass dort ein blankes Aderstück 9 freiliegt. Auf diese abisolierte Stelle 9 trifft die Stirnseite 11 der Ader der Anschlussleitung und wird dort mit dem Aderstück 9 verlötet. Um die Lötverbindung 7 herum wird in einer geeigneten Form, eine Vorvergussmasse 13 verbracht, die ein Stück weit die Isolation der Leitungen 3 und 5 mit überdeckt. Die Vorvergussmasse 13 muss im Gebrauch keine nennenswerten Kräfte aufnehmen und wird mittels eines Niederdruck-Spritzgussverfahrens so dünn vergossen, dass keine oder nur wenig Blasen eingebracht werden. Das hat eine hohe Spannungsfestigkeit von bis zu 10 kV zur Folge.

Um die Vorvergussmasse 13 herum wird mittels einer Spritzform, wie sie in der Figur 2 gezeigt ist, ein Endverguss 15 gebildet, der die Vorvergussmasse vorzugsweise vollkommen übergreift und noch ein Stück D weit diese überragt und mit der Isolation der Sammel- und der Anschlussleitung 3, 5 in Kontakt kommt.

Die Endvergussmasse 15 weist eine Anformung 16 auf, in welche eine Aussparung 17 vorgesehen ist, durch die eventuell eine Hülse 19 geführt ist. Im gezeigten Beispiel ist die Hülse 19 in der Vorvergussmasse 13 eingelassen. Sie kann aber ebenso in die Endvergussmasse 15 platziert sein, wenn die Vorvergussmasse 13 nicht die Ausbauchung der Anformung 16 mitmacht. Die Hülse dient dazu, ein Befestigungs-mittel wie eine Schraube durchzuführen, um die Abzweigung 1 an eine Unterlage, nicht gezeigt, zu befestigen.

Die Figur 2 zeigt beispielhaft eine Gießform 21 mit ihrem Unterteil 23 und Ihrem Oberteil 25, die mittels Führungsstiften 27 zusammengefügt und zueinander ausgerichtet werden. Das Unterteil 23 und das Oberteil 25 weisen jeweils eine umlaufende Erhebung 29 auf, die sich im zusammengesetzten Zustand der Gussform 21 zu einem umlaufenden Ring ergänzen, der in die Kavität der Gussform hineinragt. Dadurch werden die in der Figur 1 gezeigten Aussparungen 31 gebildet, die allerdings für das Endprodukt keine Funktion haben. Die Erhebungen 29 dienen dazu, das im Hochdruck-Spritzgussverfahren eingebrachte Material 15 so zu verwirbeln, dass es während des Einspritzvorgangs zu keiner Verschiebung der Vorvergussmasse 13 innerhalb der Kavität kommt. In der Figur 2 sind noch zwei Einspritzöffnungen 33 für das Einspritzen der Vergussmasse dargestellt.

### Bezugszeichenliste

- 1: Kabelverzweigung
- 3: Sammelleitung
- 5: Anschlussleitung
- 7: Lötverbindung
- 9: blankes Aderstück
- 11: Stirnseite Ader
- 13: Vorvergussmasse
- 15: Endvergussmasse
- 16: Anformung
- 17: Aussparung
- 19: Hülse
- 21: Gießform
- 23: Unterteil
- 25: Oberteil
- 27: Führungsstift
- 29: Erhebung
- 31: Aussparung
- 33: Einspritzöffnung

## Patentansprüche

1. Verfahren zur Fertigung einer Kabelverzweigung für die Bildung einer T- oder Y-förmigen Verbindung einer Photovoltaikmodul-Anschlussleitung mit Elektrönen-strahl-vernetztem außen liegenden Mantel an eine Sammelleitung mit Elektronenstrahl-vernetztem außen liegenden Mantel, **dadurch gekennzeichnet,**
- **dass** die Ader der Anschlussleitung mit der Ader der Sammelleitung verbunden wird,
- **dass** die Stelle der Verbindung und ein weiteres angrenzendes Stück des Außenmantels der Leitungen mittels einer Niederdruck-Spritztechnik mit einem ersten Material vorvergossen werden, und
- **dass** anschließend um die vorvergossene Masse herum mittels eines Hochdruckspritzverfahrens ein Endverguss mit einem zweiten Material vorgenommen wird.

2. Verfahren nach Anspruch 1, **dadurch gekennzeichnet, dass** der Endverguss aus einem der folgenden Materialien besteht: thermoplastisches Elastomer (TPE); thermoplastisches Elastomer auf Urethan (TPU); Caprolactam (PA 6) oder TPE-B-Flex.

3. Verfahren nach einem der Ansprüche 1 oder 2, **dadurch gekennzeichnet, dass** das erste Material des Vorvergusses ein Material auf Polyolephinbasis ist.

4. Verfahren nach einem der Ansprüche 1 bis 3, **dadurch gekennzeichnet, dass** der Endverguss das vorvergossene Material und einen daraus heraustretenden Teil der Leitungsmäntel umhüllt.

5. Verfahren nach einem der Ansprüche 1 bis 4, **dadurch gekennzeichnet, dass** der Endverguss in der Nähe des Kabelaustritts aus dem Endverguss mit einer Einschnürung oder Verengung versehen ist.

6. Verfahren nach Anspruch 5, **dadurch gekennzeichnet, dass** die Verengung die Form einer den Leitungsmantel umlaufenden Nut aufweist.

7. Verfahren nach einem der Ansprüche 1 bis 6, **dadurch gekennzeichnet, dass** der Endverguss eine Anformung aufweist, in welcher sich eine durchgehende Aus-sparung befindet, die zur Befestigung der Verzweigung mittels eines Befestigungs-mittels, wie z.B. einer Schraube, dient.

8. Verfahren nach einem der Ansprüche 1 bis 7, **dadurch gekennzeichnet, dass** der Aderquerschnitt der Sammelleitung größer ist als der der Anschlussleitung.

9. Kabelverzweigung hergestellt nach dem Verfahren gemäß einem der Ansprüche 2 bis 8, **dadurch gekennzeichnet, dass** der Endverguss (15) aus einem der folgenden Materialien besteht: thermoplastisches Elastomer (TPE); thermoplastisches Elastomer auf Urethan (TPU); Caprolactam (PA 6) oder TPE-B-Flex und dass das Material des Vorvergusses (13) ein Polyolephin ist.

10. Kabelverzweigung nach Anspruch 9, **dadurch gekennzeichnet, dass** der Endver-guss (15) in der Nähe des Kabelaustritts aus dem Endverguss (15) mit einer Einschnürung (31) oder Verengung versehen ist.
